**Europäisches Patentamt**

**European Patent Office**

**Office européen des brevets**

(11) Veröffentlichungsnummer: **0 456 955 A1**

(12) **EUROPÄISCHE PATENTANMELDUNG**

(21) Anmeldenummer: **91100031.3**

(22) Anmeldetag: **02.01.91**

(51) Int. Cl.⁵: **E01H 1/12**

Ein Antrag gemäss Regel 88 EPÜ auf Berichtigung von Schreibfehler in der Beschreibung liegt vor . Über diesen Antrag wird im Laufe des Verfahrens vor der Prüfungsabteilung eine Entscheidung getroffen werden (Richtlinien für die Prüfung im EPA, A-V, 2.2).

(30) Priorität: **09.02.90 DE 9001473 U**

(43) Veröffentlichungstag der Anmeldung:
**21.11.91 Patentblatt 91/47**

(84) Benannte Vertragsstaaten:
**AT BE CH DE FR GB LI NL**

(71) Anmelder: **HÜGELMEYER, Bernd**
**Wilhelmstrasse 97**
**W-4500 Osnabrück(DE)**

Anmelder: **ILOMA**
**AUTOMATISIERUNGSTECHNIK GmbH**
**Industriestrasse 10**
**W-4513 Belm(DE)**

(72) Erfinder: **Brokmann, Ines**
**Schledehauser Weg 93A**
**W-4500 Osnabrück(DE)**
Erfinder: **Hügelmeyer, Bernd**
**Wilhelmstrasse 97**
**W-4500 Osnabrück(DE)**

(74) Vertreter: **Busse & Busse Patentanwälte**
**Postfach 1226 Grosshandelsring 6**
**W-4500 Osnabrück(DE)**

(54) **Handgerät zum Entfernen von Tierexkrementen.**

(57) Das Handgerät umfaßt ein einen Aufnahmeraum begrenzendes Gehäuse, das im oberen Bereich mit einem Griff (2) und im unteren Bereich des Gehäuses (1) mit zwei greiferartig aus- und einschwenkbaren Klappen (4,5) versehen ist, eine Betätigungsvorrichtung (20) für die Klappen (4,5), die eine durch einen Finger einer das Gehäuse (1) am Griff (2) haltenden Hand einer Bedienungsperson betätigbare Antriebsstange (21) aufweist, und eine Vorrichtung (40) zur Fixierung eines Beutels (15) im Gehäuse (1) für die Aufnahme der Exkremente mit einem Befestigungsglied (41;50) zum Erfassen des Beutels (15) an seinem rückwärtigen geschlossenen Ende. Dabei ist das Befestigungsglied (41;50) aus einer unteren Annahmestellung im Bereich zwischen den Klappen (4,5) in eine Freigabestellung oberhalb des Aufnahmeraumes (9) im Gehäuse (1) aufziehbar.

EP 0 456 955 A1

## HANDGERÄT ZUM ENTFERNEN VON TIEREXKREMENTEN

Die Erfindung bezieht sich auf ein Handgerät zum Entfernen von Tierexkrementen gemäß dem Oberbegriff des Anspruchs 1.

Bei einem bekannten Gerät dieser Art (DE-OS 29 41 356) weist das Gehäuse einen oberen, seitlich geschlossenen, nach unten hin offenen Bereich auf, der an seinen Längsrändern mit schwenkbar angelenkten, einwärts bogenförmig gekrümmten Klappen versehen ist. Die Greifteile bildenden Klappen begrenzen in ihrer Shließstellung unterseitig einen etwa halbzylindrischen, stirnseitig offenen Hohlraum und überlappen einander im Bereich ihrer freien Längsränder. Im oberen Gehäusebereich ist eine Klemmvorrichtung für das obere geschlossene Ende eines Einzelbeutels vorgesehen, dessen unteres freies Ende um die Klappen nach außen umstülpbar ist. Bei einer Benutzung des Gerätes werden durch Schließen der Klappen auf dem Boden befindliche Exkremente in das Innere des an seinem unteren Ende aufgespreizten Beutels überführt.

Ein derartiges Gerät ist in seiner Handhabung nach der Exkrementenaufnahme problematisch, und es besteht bis zum Entfernen des benutzten Beutels die Gefahr der Verschmutzung mit Exkrementenresten an außenliegenden Beutelbereichen nahe den freien Randkanten der Klappen, die bei der Exkrementenaufnahme den durch in die Exkremente verschmutzten Boden überstreichen.

Der Erfindung liegt die Aufgabe zugrunde, ein Handgerät der eingangs genannten Art zu schaffen, das besonders einfach zu handhaben ist und Verschmutzungsgefahren vermeidet. Die Erfindung löst diese Aufgabe durch ein Handgerät mit den Merkmalen des Anspruchs 1. Hinsichtlich wesentlicher weiterer Ausgestaltungen wird auf die Ansprüche 2 bis 22 verwiesen.

Das Handgerät nach der Erfindung ermöglicht nach dem Aufnahmevorgang von Exkrementen durch das Aufziehen des verschlossenen rückwärtigen Beutelendes ein Einziehen außenliegender verschmutzter Beutelbereiche in das Gehäuse. Zugleich gelangt das rückwärtige Beutelende im Zuge seines Aufziehens in eine Freigabestellung, aus der er bei Öffnen der Klappen unter Schwerkraft aus dem Aufnahmeraum im Gehäuse heraus- und in irgendeinen geeigneten Entsorgungsbehälter herabfallen kann. Weder das Gehäuse, noch dessen Benutzer laufen bis zum Auswerfen eines benutzten Beutels Gefahr einer Verschmutzung, so daß das Gerät überaus hygienisch und bedienerfreundlich nicht nur vor, sondern auch nach dem Aufnehmen von Tierexkrementen und bis zum Auswerfen eines benutzten Beutels ohne besondere Achtsamkeit gehandhabt werden kann.

Zahlreiche weitere Einzelheiten ergeben sich aus der nachfolgenden Beschreibung und der Zeichnung, in der zwei Ausführungsbeispiele des Gegenstands der Erfindung schematisch näher veranschaulicht sind. In der Zeichnung zeigen:

Fig. 1    eine schematische Seitenansicht des Gerätes nach der Erfindung,

Fig. 2    eine Stirnansicht des Gerätes nach Fig. 1,

Fig. 3    einen abgebrochenen Schnitt durch das Gerät nach der Linie III-III in Fig. 1 bei geöffneten Klappen,

Fig. 4    einen abgebrochenen Schnitt nach der Linie IV-IV in Fig. 3,

Fig. 5    eine abgebrochene Detaildarstellung ähnlich Fig. 3 zur Veranschaulichung einer abgewandelten Ausführung,

Fig. 6    einen abgebrochenen Schnitt nach der Linie VI-VI in Fig. 1

Fig. 7    eine schematische Seitenansicht eines in seiner Abmessung und Ausbildung auf das Handgerät abgestimmten Beutels,

Fig. 8    einen schematischen Schnitt zu Fig. 7,

Fig. 9    eine vereinfachte Darstellung ähnlich Fig. 5 zur Veranschaulichung einer abgewandelten weiteren Ausführung,

Fig. 10    einen abgebrochenen Schnitt nach der Linie X-X in Fig. 9.

Fig. 11    eine abgebrochene Ausschnittdarstellung eines abgewandelten Befestigungsgliedes für die Beutelmitnahme, und

Fig. 12    einen abgebrochenen Schnitt nach der Linie XII-XII in Fig. 11.

Das in der Zeichnung veranschaulichte Handgerät zum Entfernen von Tierexkrementen oder dgl. Verunreinigungen umfaßt ein Gehäuse 1, das in seinem oberen Bereich einen Griff 2 mit darunter befindlicher Griffaussparung 3 und im unteren Bereich zwei greiferartig aus- und einschwenkbare Klappen 4, 5 umfaßt.

Das Gehäuse 1 besteht bevorzugt aus zwei Halbteilen 6, 7 die entlang einer mit der Längsmittelebene des Handgerätes zusammenfallenden Verbindungsebene 8 aneinandergrenzen und untereinander verbunden sind, z.B. durch eine nicht näher veranschaulichte geeignete Verschraubung oder Rastverriegelung. Die Halbteile 6, 7 sind zweckmäßig als relativ dünnwandige Formspritzkörper aus Kunststoff, z.B. PVC, PE oder PU, ausgeführt.

Die beiden Halbteile 6, 7 begrenzen zwischen sich einen Innenraum für die Aufnahme noch näher zu beschreibender weiterer Bestandteile des Handgerätes 1, und die Klappen 4, 5 des Gehäuses 1 umgrenzen ihrerseits einen unterseitig und seitlich geschlossenen Aufnahmeraum 9 für Exkremente. Zu diesem Zweck sind die Klappen 4, 5 als im horizontalen Schnitt U-förmige und im vertikalen Schnitt L-förmige Halbschalen ausgebildet, die in Schließstellung an ihren einander zugewandten Rändern aneinandergrenzen und den oberen Gehäusebereich zumindest im wesentlichen bündig fortsetzen.

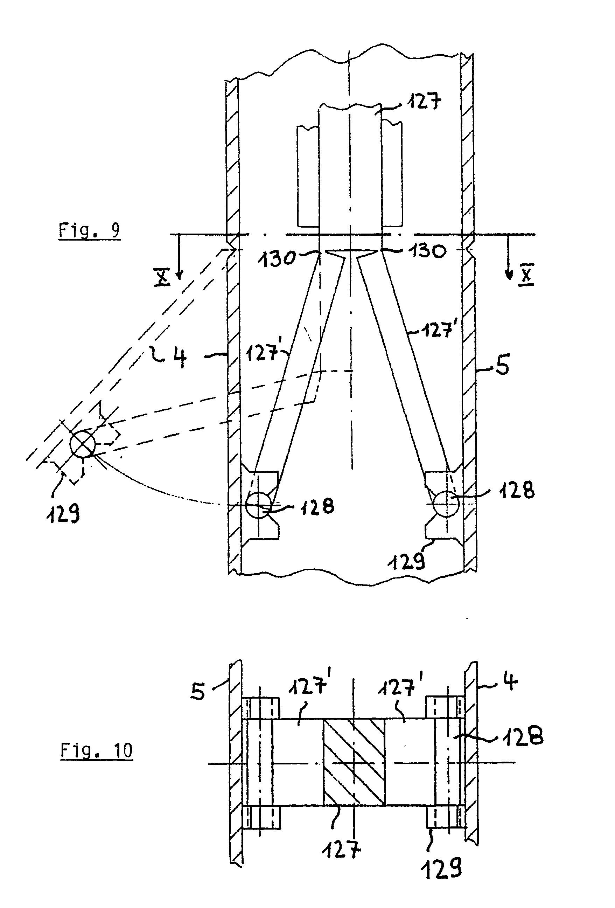

Die Klappen 4, 5 können wie dargestellt gesonderte, aus Kunststoff gespritzte Formkörper bilden, die um Achsen 10, 11 klappbar mit dem oberen Gehäusebereich verbunden sind. Statt dessen können die Klappen 4, 5 aber auch integraler Bestandteil der Halbteile 6, 7 sein, in welchem Falle die Klappachsen für die Klappen 4, 5 durch ein Filmscharnier 4',5' (Fig. 9) gebildet sind. Eine solche Ausführung ist besonders einfach und montagefreundlich.

Stirnseitig der Klappen 4, 5 ist bevorzugt je ein flacher Führungssteg 12 vorgesehen, der zweckmäßig ebenfalls integral mit den Halbteilen 6, 7 des Gehäuses 1 ausgeführt ist. Die Führungsstege 12, 13 sind etwa bis in die untere Öffnungsebene der geöffneten Klappen 4, 5 herabgezogen und haben eine Breite, die bei Außenanordnung im wesentlichen der stirnseitigen Breite des Gehäuses 1 entspricht. Diese Führungsstege 12, 13, die auch den Stirnseiten der Klappen 4,5 innenseitig zugeordnet sein können, übernehmen die Führung der Folie eines Beutels 15 für die Aufnahme zu entfernender Tierexkremente, wie dies weiter unten noch beschrieben wird, und dienen zugleich als Anschlagglieder auf dem Boden, die verhindern, daß durch Aufstützen des Handgerätes auf dem Boden die geöffneten Klappen 4, 5 gewaltsam über ihre vorgegebene Öffnungsstellung hinaus verschwenkt werden und Beschädigungen am Handgerät entstehen.

Für die Bewegung der Klappen 4, 5 ist eine Betätigungsvorrichtung 20 vorgesehen, die eine durch einen Finger der das Gerät am Griff 2 haltenden Hand einer Bedienungsperson betätigbare Antriebsstange 21 umfaßt. Die Antriebsstange 21 ist in ihrem unteren Bereich 22 als doppelseitige Zahnstange ausgebildet, die zwischen Zahnradsegmente 23, 24 an der Innenseite der Klappen 4, 5 zwischengreift und mit diesen kämmt.

Die Antriebsstange 21, die im Bereich ihres oberen Endes mit einer Grifföse 25 für den Bedienungsfinger der Griffhand eines Benutzers versehen und im Gehäuse 1 naher einer Stirnseite auf- und abverschieblich geführt ist, steht unter Vorspannung einer im Gehäuse 1 abgestützten Druckfeder 26, die bei dem dargestellten Beispiel auf das obere Ende der Antriebsstange 21 einwirkt und bestrebt ist, diese abwärts zu verschieben und dadurch die Klappen 4,5 in Offenstellung zu schwenken. Die Antriebsstange 21 ist ferner mit zwei, bei einer Aufwärtsbewegung der Antriebsstange 21 entgegen der Wirkung der Druckfeder 26 nacheinander in einer Gehäuseausnehmung 27 in Rasteingriff gelangenden Riegelzungen 28, 29 versehen, die mittels eines Auslöseknopfes 30, der der Gehäuseausnehmung 27 zugeordnet ist, außer Verriegelungseingriff bewegbar ist. In Riegeleingriff mit der Wandung 31 der Gehäuseausnehmung 27 sichert die Riegelzunge 29 die Klappen 4, 5 in einer Schließvorstellung, in der die Klappen 4, 5 mit ihren einander zugewandten Rändern in einem geringen Abstand voreinanderliegen. Gelangt im Zuge einer weiteren Aufwärtsbewegung der Antriebsstange 21 die im Abstand hinter der Riegelzunge 29 gelegene Riegelzunge 28 in Verriegelungseingriff mit der Gehäuseausnehmung 27, so befinden sich die Klappen 4, 5 in voller Schließstellung, in der ihre einander zugewandten Ränder in gegenseitigem Druckeingriff aneinanderliegen.

Wie aus Fig. 9 ersichtlich kann die Antriebsstange 127 in ihrem unteren Bereich auch in zwei Gelenkstößel 127' übergehen, die über Filmscharniere 130 angelenkt sind und mittels eines Rastgelenkkolbens 128 gelenkig an Rastgelenken 129 an den Klappen 4,5 angreifen. Diese Rastgelenkverbindung ist besonders montagefreundlich.

Im mittleren Bereich des Gehäuses 1 ist eine Vorrichtung 40 zur Fixierung eines Beutels 15 für die Aufnahme von Exkrementen im Gehäuse 1 vorgesehen, die ein Befestigungsglied zum Erfassen des Beutels 15 an seinem rückwärtigen geschlossenen Ende umfaßt.

Dieses Befestigungsglied besteht bei der Ausführung nach Fig. 3 aus einem Hakenteil 41 für das Aufhängen des mit einer Lochung 42 versehenen rückwärtigen geschlossenen Beutelendes, der am unteren Ende eines in einer Führung 43 im Gehäuse 1 auf und ab verschieblich geführten Schiebers 44 befestigt ist. Dieser Schieber 44 ist mittels eines Griffteils 45, das einen Schlitz 46 in der Wandung des Halbteils 7 des Gehäuses 1 durchgreift, aus einer in Fig. 3 dargestellten unteren Endstellung in eine obere Endstellung bewegbar, und im Zuge dieser Aufwärtsbewegung gelangt der Hakenteil 41 aus einer unteren Annahmestellung für das Beutelende im Bereich zwischen den Klappen 4, 5 in eine Freigabestellung oberhalb des von den Klappen 4, 5 umgrenzten Aufnahmeraumes 9.

Die Freigabestellung kann durch die obere Endstellung des Schiebers 44 oder auch durch ein Auslöseteil definiert sein, das bei Annäherung des Befestigungsgliedes an die Freigabestellung die Beutelfixierung am Befestigungsglied aufhebt.

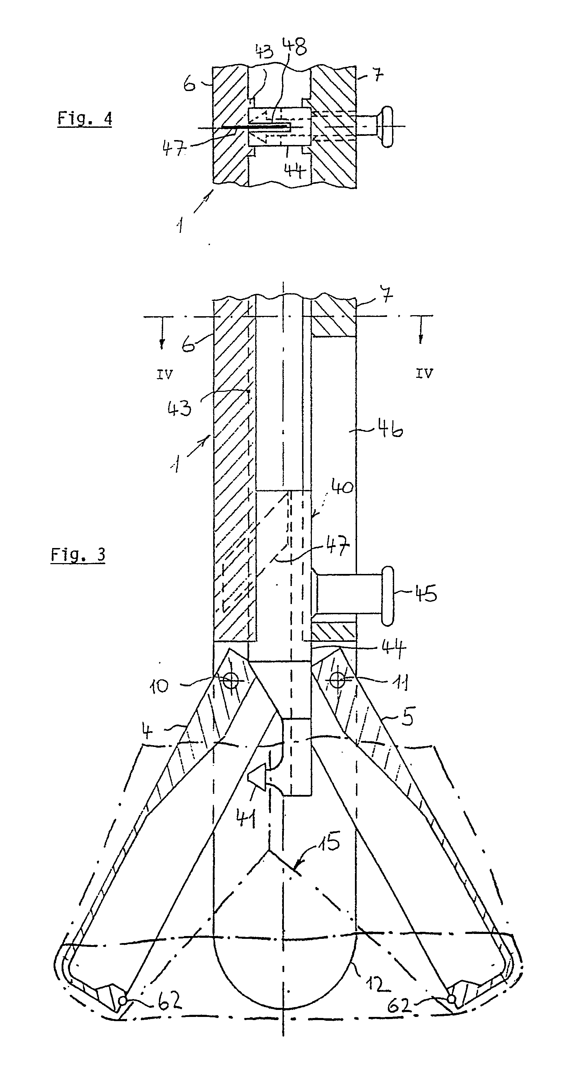

Bei der Ausführung nach Fig. 3 ist als Auslöseteil ein Schneidmesser 47 in der Bewegungsbahn des Hakenteils 41 vorgesehen, und der Hakenteil 41 ist mit einem zu seiner Bewegungsbahn parallelen Schlitz 48 (Fig. 4) versehen, in den unter Durchtrennung des an die Beutellochung 42 angrenzenden Beutelrandes 49 das Schneidmesser 47 am Ende der Bewegung des Hakenteils 41 in die Freigabestellung eintritt. Anstelle einer derartigen Ausbildung könnte als Auslöseteil auch ein Abstreifer vorgesehen sein, der bei Annäherung des Hakenteils 41 an die Freigabestellung mit dem Beutel 15 im Bereich beidseits der Lochung 42 in Eingriff gelangt und das Beutelende vom Hakenteil 41 abstreift.

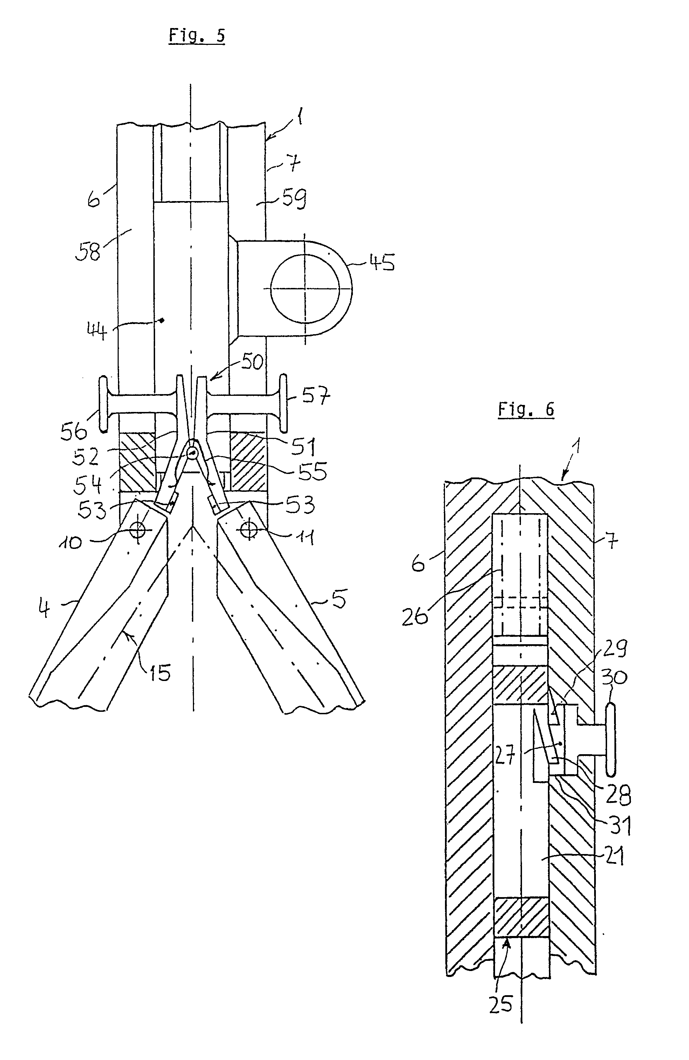

Bei der Ausführung nach Fig. 5 ist das Befestigungsglied als Klemmgreifer 50 ausgebildet, der zwei Greiferhebel 51, 52 mit je einer Klemmbacke 53 umfaßt, die zangenartig um eine gemeinsame Achse 54 in und außer Klemmeingriff schwenkbar und durch eine Spannfeder 55 für eine Bewegung in die Klemmstellung vorgespannt sind. An den den Klemmbacken 53 abgewandten freien Enden der Greiferhebel 51, 52 sind Drucktasten 56, 57 vorgesehen, die durch Schlitze 58, 59 in der Wandung des Gehäuses 1 nach außen vorspringen und durch Fingerdruck betätigbar sind, um den Klemmgreifer 50 in die in Fig. 5 gezeigte Offenstellung zu überführen. In dieser Offenstellung kann das rückwärtige geschlossene Ende des Beutels 15 zwischen die Klemmbacken 53 eingeführt und der Klemmgreifer 50 durch Freigeben der Drucktasten 56, 57 von der Feder 55 geschlossen werden.

Der Klemmgreifer 50 ist ebenfalls an einem Schieber 44 befestigt, der entlang von Gehäuseführungen 43 im Gehäuse 1 verschiebbar ist, wie das im Zusammenhang mit der Ausführung nach Fig. 3 beschrieben wurde. Bei der Ausführung nach Fig. 5 kann die Freigabe des vom Klemmgreifer 50 gehaltenen Beutelendes in der Freigabestellung durch Öffnen des Klemmgreifers 50 von Hand erfolgen. Statt dessen kann auch ein Auslöseglied, z.B. ein jedem Greiferhebel 51,52 zugeordneter, nicht näher veranschaulichter Auflaufnocken vorgesehen sein, das bei Annäherung des Klemmgreifers 50 an die Freigabestellung mit den Greiferhebeln 51, 52 in Eingriff gelangt und Klemmbacken 53 aus ihrem Klemmeingriff am Beutel 15 löst.

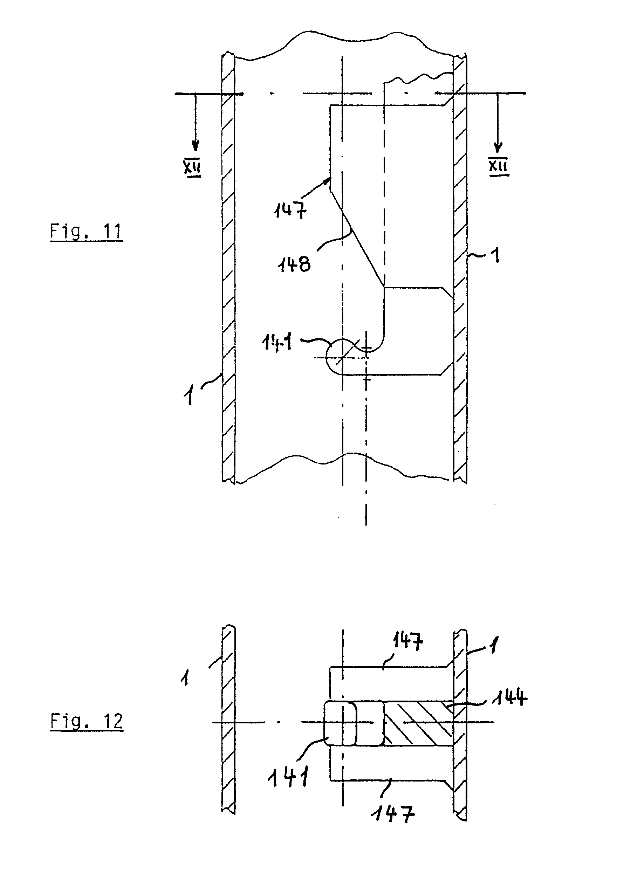

Wie den Fig. 11 und 12 entnehmbar ist, kann der Hakenteil 141 eine oberseitig gerundete Ausführung haben, die mit beidseits des Schiebers 144 angeordneten Abstreifern 147 mit Auflauframpen 148 zusammenwirkt. Nähert sich das Hakenteil 141 seiner oberen Endstellung an, so streifen die Abstreifer 147 den auf dem Hakenteil 141 aufgehängten Beutel 15 einseitig ab, womit die Freigabe erfolgt ist.

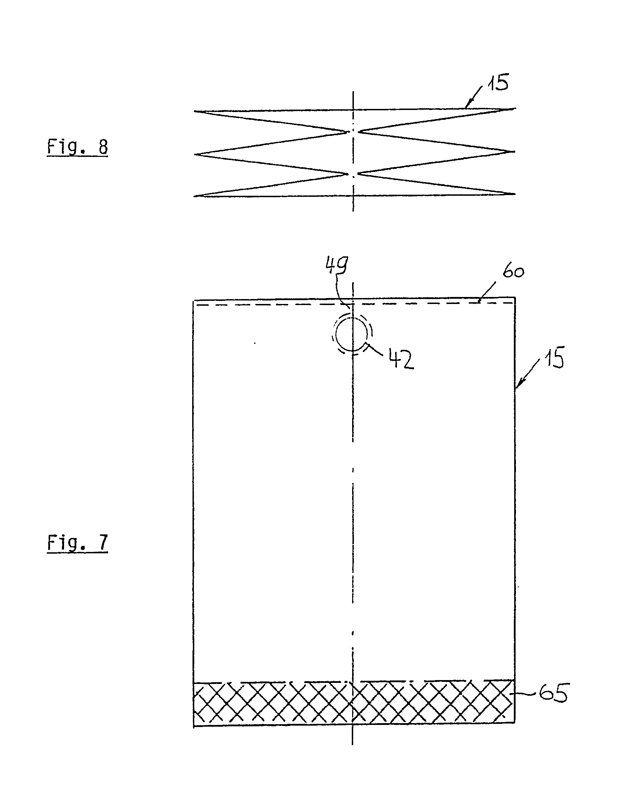

Der Beutel ist, wie das die Fig. 7 und 8 erkennen lassen, bevorzugt als Doppelseitenfaltenbeutel ausgebildet, der im Bereich seines rückwärtigen Endes durch eine Quernaht 60 verschlossen ist. Vorteilhaft besteht der Beutel 15 aus bei niedriger Temperatur siegel- bzw. schweißbarer Kunststofffolie. Dies ermöglicht es, einen benutzten Beutel nahe seinem unteren Ende mit Hilfe von Heizgliedern 62 durch Siegeln oder Schweißen zu verschließen, die in die Ränder der Klappen 4, 5 eingelassen sein können, wie das schematisch in Fig. 3 angedeutet ist. Diese Heizglieder 62 können über nicht dargestellte elektrische Leiter und einen Schalter an eine im Gehäuse unterbringbare, ebenfalls nicht näher veranschaulichte Batterie zum Zwecke ihrer Widerstandserwärmung angeschlossen werden.

Der Beutel 15 kann statt dessen auch aus feuchtigkeitsabweisend beschichtetem Papier bestehen. In diesem Fall, aber auch im Falle des Bestehens aus Kunststofffolie, kann der Beutel 15 an seinem unteren offenen Ende oder in dessen Nähe mit einer Verschlußvorrichtung 65 versehen sein. Diese kann als innenliegender Klettenverschluß ausgebildet sein. Statt dessen kann die Verschlußvorrichtung 65 auch von einem durch Druck und/oder durch Erwärmung, z.B. mittels der Heizglieder 62, aktivierbaren Schmelzkleber, Kontaktkleber oder dgl. Klebmittel gebildet sein, der auf in Verschlußstellung des Beutels einander zugewandten Innenflächen bereichsweise als Beschichtung aufgetragen sein kann.

Für eine Benutzung des Handgerätes wird durch Betätigung des Auslöserknopfes 30 die Betätigungsstange 21 für eine Abwärtsbewegung freigegeben und das Öffnen der Klappen 4, 5 herbeigeführt. Alsdann wird ein Beutel 15 mit seinem geschlossenen rückwärtigen Ende mit dem Befestigungsglied 41 bzw. 50 verbunden, das zu diesem Zweck in seine Annahmestellung zwischen die Klappen 4, 5 herabgeschoben wird. Danach wird das untere Ende des Beutels aufgespreizt und die Beutelfolie allseits um die Klappen 4, 5 und die Führungsstege 12, 13 nach außen umgestülpt, wie dies schematisch in Fig. 3 veranschaulicht ist. Dieses so vorbereitete Handgerät wird alsdann zum Entfernen von Tierexkrementen auf diese von oben aufgesetzt und danach durch Hochziehen der Antriebsstange 21 über die Grifföse 25 das Schließen der Klappen 4, 5 herbeigeführt, und zwar zunächst bis zur Schließvorstellung, in der nun mittels des Schlittens 44 das Befestigungsglied 41 bzw. 50 mitsamt dem Beutel 15 und seinem Inhalt im Gehäuse 1 ein Stück hochgezogen wird. Dadurch wird zumindest jener Bereich des umgestülpten Beutels in das Gehäuse 1 eingezogen, der bei dem Aufnahmevorgang eine Verschmutzung erfahren haben könnte.

Anschließend wird über die Antriebsstange 21 das völlige Schließen der Klappen 4, 5 bewirkt, die in dieser Schließstellung verriegelt sind. Der Beutel 15 kann im Bedarfsfalle mittels der Heizglieder 62 bzw. mit Hilfe der Verschlußvorrichtung 65, die sich vorteilhaft in Freigabestellung des Beutels 15 in dem noch außerhalb des Gehäuses 1 gelegenen Beutelbereich befindet, verschlossen werden, so daß ein hygienischer Abschluß des Beutelinhalts gewährleistet ist. Zu einem geeigneten Zeitpunkt kann anschließend der Beutel 15 in einen Entsorgungsbehälter ausgeworfen werden. Dieser hat sich beim Erreichen der Freigabestellung entweder bereits automatisch von seinem Befestigungsglied 41 bzw. 50 gelöst oder ist in der Freigabestellung von diesem durch einen Handgriff von außen her ablösbar.

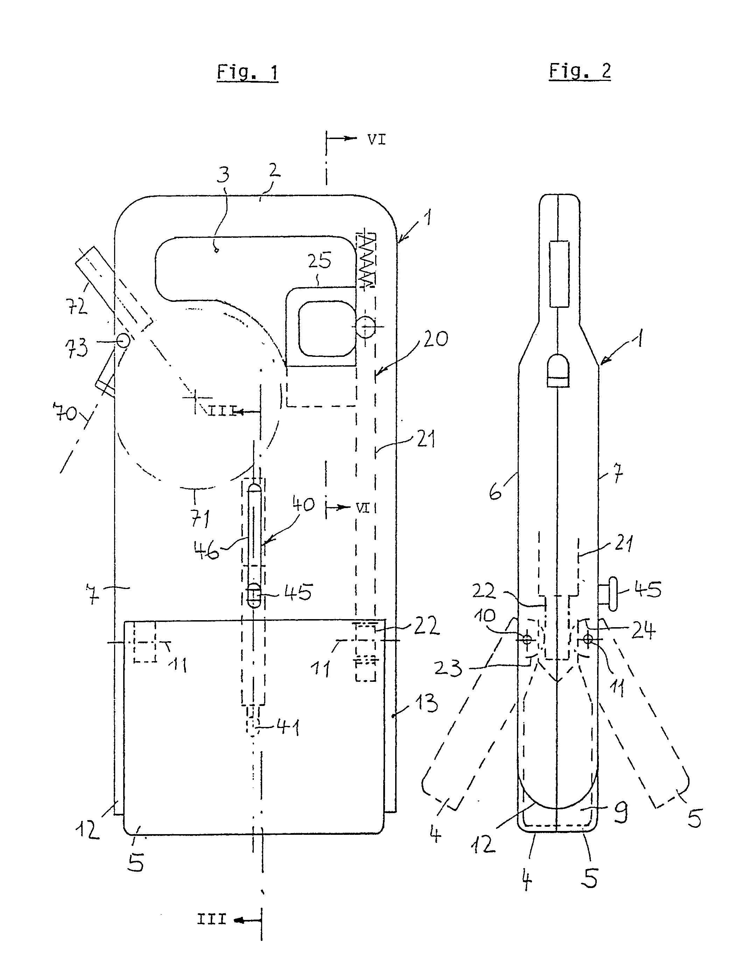

Wie die Fig. 1 erkennen läßt, eignet sich schließlich das Gehäuse 1 zur Aufnahme eines zusätzlichen Funktionsteils, nämlich einer Hundeleine 70, die auf einer mit einem Federmotor oder -speicher gekuppelten Wickelrolle 71 auf- und abrollbar und mittels einer Verriegelungsvorrichtung 72 und einer Sperrvorrichtung 73 für diese betätigbar ist.

**Patentansprüche**

1. Handgerät zum Entfernen von Tierexkrementen od. dgl. Verunreinigungen, mit einem einen Aufnahmeraum begrenzenden Gehäuse, das im oberen Bereich mit einem Griff (2) und im unteren Bereich des Gehäuses (1) mit zwei greiferartig aus- und einschwenkbaren Klappen (4,5) versehen ist, mit einer Betätigungsvorrichtung (20) für die Klappen (4,5), die eine durch einen Finger einer das Gehäuse (1) am Griff (2) haltenden Hand einer Bedienungsperson betätigbare Antriebsstange (21) umfaßt, und mit einer Vorrichtung (40) zur Fixierung eines Beutels (15) im Gehäuse (1) für die Aufnahme der Exkremente, die ein Befestigungsglied (41;50) zum Erfassen des Beutels (15) an seinem rückwärtigen geschlossenen Ende umfaßt, **dadurch gekennzeichnet,** daß das Befestigungsglied (41;50) aus einer unteren Annahmestellung im Bereich zwischen den Klappen (4,5) in eine Freigabestellung oberhalb des Aufnahmeraumes (9) im Gehäuse (1) aufziehbar ist.

2. Gerät nach Anspruch 1, **dadurch gekennzeichnet,** daß als Befestigungsglied ein Hakenteil (41) für das Aufhängen des mit einer Lochung (42) versehenen rückwärtigen, geschlossenen Ende des Beutels (15) vorgesehen ist.

3. Gerät nach Anspruch 1, **dadurch gekennzeichnet,** daß das Befestigungsglied als Klemmgreifer (50) ausgebildet ist, der zumindest einen Greiferhebel (51,52) mit einer Klemmbacke (53) und eine Spannfeder (55) aufweist, die den Klemmgreifer (50) zu schließen bestrebt ist.

4. Gerät nach einem der Ansprüche 1 bis 3, **dadurch gekennzeichnet,** daß das Befestigungsglied (41;50) mittels eines im Gehäuse (1) verschieblich geführten Schiebers (44) zwischen seiner Annahme- und seiner Freigabestellung bewegbar ist, der mittels eines einen Schlitz (46) in der Gehäusewand durchgreifenden Griffteils (45) beätigbar ist.

5. Gerät nach einem der Ansprüche 1 bis 4, **dadurch gekennzeichnet,** daß im Gehäuse (1) ein Auslöseteil (47;147) vorgesehen ist, das bei Annäherung des Befestigungsglieds (41;50) an die Freigabestellung die Beutelfixierung am Befestigungsglied aufhebt.

6. Gerät nach einem der Ansprüche 1 bis 5, **dadurch gekennzeichnet,** daß die Klappen (4,5) des Gehäuses (1) einen unterseitig und stirnseitig geschlossenen Aufnahmeraum (9) umgrenzende, im horizontalen Schnitt U-förmige und im vertikalen Schnitt L-förmige Halbschalen bilden, die in Schließstellung mit ihren einander zugewandten Rändern aneinander angrenzen und eine fluchtende Fortsetzung des oberen Gehäuseteils bilden.

7. Gerät nach einem der Ansprüche 1 bis 6, **dadurch gekennzeichnet,** daß den Klappen (4,5) stirnseitig je ein flacher, innen- oder außenliegender Führungssteg (12,13) vorgesehen ist, der vom Gehäuse (1) etwa bis in die Öffnungsebene der geöffneten Klappen (4,5) herabgereicht ist und eine Breite aufweist, die im wesentlichen der stirnseitigen Breite des Gehäuses (1) entspricht.

8. Gerät nach einem der Ansprüche 1 bis 7, **dadurch gekennzeichnet,** daß sich die Antriebsstange (121) im unteren Bereich in zwei Gelenkstößel unterteilt, die über ein Filmgelenk (121) angelenkt sind und über Rastgelenkbolzen (128) in Rastgelenken (129) an den Klappen (4,5) gelenkig angreifen.

9. Gerät nach Anspruch 8, **dadurch gekennzeichnet,** daß die Antriebsstange (21) unter Vorspannung einer Druckfeder (26) steht, die bestrebt ist, die Klappen (4,5) in Offenstellung zu schwenken.

10. Gerät nach einem der Ansprüche 1 bis 9, **dadurch gekennzeichnet,** daß die Antriebsstange (21) mit einer oder zwei im Abstand hintereinander angeordneten, bei einer Schließbewegung entgegen der Druckfeder (26) in einer Gehäuseausnehmung (27) in Rasteingriff gelangenden Riegelzungen (28,29) versehen und ein Auslöseknopf (30) der Gehäuseausnehmung (27) zugeordnet ist, mittels dem die Riegelzunge(n) außer Verriegelungseingriff in der Gehäuseausnehmung (27) bewegbar sind.

11. Gerät nach einem der Ansprüche 1 bis 10, **dadurch gekennzeichnet,** daß der Beutel (15) als Doppelseitenfaltenbeutel ausgebildet ist, der im Bereich seines rückwärtigen Endes durch eine Quernaht (60) verschlossen und mit einer Lochung (42) versehen ist.

12. Gerät nach einem der Ansprüche 1 bis 11, **dadurch gekennzeichnet,** daß in den oberen Bereich des Gehäuses eine ab- und aufrollbare Hundeleine (70) mit einer mit einem Federmotor gekuppelten Wickelrolle (71) und einer Verriegelungs-(72) und einer Sperrvorrichtung (73) für diese integriert ist.

Fig. 1

Fig. 2

Fig. 4

Fig. 3

8

Fig. 5

Fig. 6

9

Fig. 8

15

Fig. 7

49

60

42

15

65

Fig. 9

Fig. 10

11

Fig. 11

147

148

14-1

1

1

XII

XII

1

Fig. 12

147

1

1

144

141

147

**Europäisches Patentamt**

# EUROPÄISCHER RECHERCHENBERICHT

Nummer der Anmeldung

**EP 91 10 0031**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,Y | GB-A-2 032 831   (HOLM)<br>* das ganze Dokument * | 1,2,5 | E 01 H 1/12 |
| Y,A | US-A-4 477 111   (CROOKS)<br>* das ganze Dokument * | 1,2,5,4 | |
| A | US-A-4 875 729   (PECK)<br>* Abbildungen * | 1,3 | |
| A | DE-U-8 530 699   (BEISSER)<br>* Abbildung 3 * | 1,6 | |
| A | US-A-4 253 691   (LIU)<br>* das ganze Dokument * | 1,9,10 | |
| A | DE-A-3 412 339   (SCHÄFER)<br>* Seite 5, Zeile 16 - Zeile 21; Abbildung * | 1,12 | |

| RECHERCHIERTE SACHGEBIETE (Int. Cl.5) |
|---|
| E 01 H |

Der vorliegende Recherchenbericht wurde für alle Patentansprüche erstellt

| Recherchenort | Abschlußdatum der Recherche | Prüfer |
|---|---|---|
| Den Haag | 19 April 91 | DIJKSTRA G. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument